# FASCICULE DE BREVET EUROPEEN

(11) **EP 2 097 475 B1**
(45) Date de publication et mention de la délivrance du brevet: **30.11.2011**
(21) Numéro de dépôt: 07857969.5
(22) Date de dépôt: 20.12.2007
(51) Int. Cl.: C08K 5/09, C08K 5/101, C08K 5/20, C08L 95/00, E01C 7/18

(54) **FLUXANT ET SES APPLICATIONS**
FLUSSMITTEL UND ANWENDUNGEN DAFÜR
FLUX AND APPLICATIONS THEREOF

(30) Priorité: 22.12.2006 FR 0611355
(43) Date de publication de la demande: 09.09.2009
(73) Titulaire: Total Raffinage Marketing, 92800 Puteaux (FR)
(72) Inventeur: DREESSEN, Sylvia, 69360 Solaize (FR); GODIVIER, Charlotte, 75017 Paris (FR); MARIOTTI, Sophie, 78220 Viroflay (FR)
(74) Mandataire: Cabinet Plasseraud
(86) Numéro de dépôt international: PCT/EP2007/064350
(87) Numéro de publication internationale: WO 2008/077888

(56) Documents cités:
- EP-A- 1 522 570
- EP-A- 1 717 275
- FR-A1- 2 721 043
- FR-A1- 2 785 603
- FR-A1- 2 859 212
- OCL, vol. 12, no. 4, juillet 2005 (2005-07), pages 304-307, XP002438452

## Description

### DOMAINE DE L'INVENTION

La présente invention entre dans le domaine des compositions bitumineuses, et plus spécifiquement, le domaine des additifs de fluidification mis en oeuvre dans les compositions bitumineuses. Ces additifs sont généralement appelés fluxants. L'invention concerne également des produits dans lesquels les fluxants peuvent être incorporés.

L'invention concerne la préparation de fluxants, de produits contenant ces fluxants et les divers modes d'utilisation de ces fluxants et des produits contenant ces fluxants.

### CONTEXTE TECHNIQUE DE L'INVENTION

L'utilisation du bitume dans la fabrication de matériaux pour applications routières et industrielles est connue de longue date : le bitume est le principal liant hydrocarboné utilisé dans le domaine de la construction routière ou du génie civil. Du fait de la viscosité élevée du bitume à température ambiante, sa mise en oeuvre est problématique. Plusieurs techniques visant à diminuer la viscosité du bitume ont été développées, soit par chauffage, soit en le mettant sous forme d'émulsion, soit encore en le mélangeant avec des fluxants.

Les bitumes fluxés sont des compositions de bitume(s) obtenues à partir de bitumes purs dont on a abaissé la viscosité par addition de solvants volatils. L'addition de fluxant autorise des températures de mise en oeuvre plus basses que les bitumes purs. Les catégories les plus visqueuses de bitumes fluxés sont généralement réservées aux enduits superficiels, tandis que les plus fluides sont généralement utilisées pour l'imprégnation, la stabilisation des sols, pour la fabrication des émulsions et la préparation des enrobés à froid stockables.

Selon la terminologie adoptée dans le cadre du présent exposé, les liants bitumineux fluidifiés et les liants bitumineux fluxés sont regroupés dans une seule et même catégorie, les termes "fluxés" et "fluidifiés" étant ainsi considérés comme synonymes.

Traditionnellement, les bitumes fluxés sont obtenus par mélange, à chaud du liant bitumineux, et du fluxant. De manière générale, on connaît les fluxants d'origine pétrolière, les fluxants carbochimiques et les fluxants d'origine végétale.

Classiquement, le fluxant qu'il est possible d'assimiler à un solvant, présente un intervalle de distillation compris entre 150 et 450°C, cette coupe pouvant être composée d'au moins deux fractions d'intervalles de distillation différents mais compris dans celui de ladite coupe.

Les pétroliers ont développé par le passé-des produits utilisables comme fluxants. Il s'agit par exemple, de fluxants dits de première génération appartenant à la famille de distillats de pétrole. Ces fluxants contiennent plus de 70 % de composés aromatiques. La demanderesse a mis au point une seconde génération de fluxants contenant des coupes spécifiques d'hydrocarbures saturés et aromatiques. Ces coupes sont décrites dans le brevet FR2859212 A1. Ces composés présentent des inconvénients car ils dégagent des composés volatiles et des fumées et ont également des points éclairs nettement plus bas que ceux des bitumes, ce qui induit des règles de sécurité plus drastiques pour les utilisateurs.

Plus récemment d'autres types de fluxants ont été développés utilisant des huiles végétales ou dérivés d'huiles végétales parfois appelés « Biodiesel ». Bien que ces huiles aient l'avantage d'être moins volatiles, les performances techniques à court terme du liant fluxé sont bien inférieures à celles obtenues avec des liants fluxés à l'aide de fluxants pétroliers.

La présente invention vise donc à améliorer les problèmes de volatilité, de faible point éclair du fluxant, tout en améliorant les performances techniques à court terme du liant fluxé, c'est-à-dire l'émission de fumées lors de l'application du liant, la cohésion, l'adhésion et la consistance du liant.

### BREVE DESCRIPTION DE L'INVENTION

Ces objectifs, parmi d'autres, sont atteints par la présente invention qui concerne tout d'abord un fluxant pour composition bitumineuse, lequel fluxant comprend :
- au moins un composé d'origine végétale ou animale **CVA** choisi parmi les acides gras en C₆ à C₂₄ sous forme acide, ester ou amide, en une fraction massique de 50 % à 99 % en masse du fluxant,
- au moins une coupe hydrocarbonée **CH** issue du raffinage du pétrole brut dont l'intervalle de distillation ID (en °C) est tel que 150 ≤ ID ≤ 450, en une fraction massique de 1 % à 50 % en masse du fluxant.

L'invention concerne également une composition bitumineuse comprenant au moins un bitume et au moins un fluxant tel que défini ci-dessus. Selon une variante de l'invention, la composition bitumineuse comprend en outre au moins un polymère, utile notamment pour modifier les caractéristiques mécaniques de ladite composition. La composition bitumineuse peut se trouver, notamment, sous la forme d'une émulsion ou sous forme anhydre.

Selon un autre aspect de l'invention, celle-ci concerne une solution-mère pour la préparation d'une composition bitumineuse, laquelle solution-mère comprend au moins un polymère et au moins un fluxant tel que défini ci-dessus. En particulier, la solution-mère est fortement concentrée en polymère.

L'invention concerne en outre une association bitume-granulats comprenant des granulats et un liant bitumineux. Ce liant bitumineux est obtenu à partir d'une composition bitumineuse telle que décrite ci-dessus, c'est-à-dire une composition bitumineuse comprenant un fluxant qui comprend :
- au moins un composé d'origine végétale ou animale **CVA** choisi parmi les acides gras en C₆ à C₂₄ sous forme acide, ester ou amide, en une fraction massique de 50 % à 99 % en masse du fluxant,
- au moins une coupe hydrocarbonée **CH** issue du raffinage du pétrole brut dont l'intervalle de distillation ID (en °C) est tel que 150 ≤ ID ≤ 450, en une fraction massique de 1 % à 50 % en masse du fluxant.
Selon un autre aspect de l'invention, celle-ci concerne l'utilisation d'une composition comprenant au moins un composé d'origine végétale ou animale **CVA** choisi parmi les acides gras en C6 à C24 sous forme acide, ester ou amide, en une fraction massique de 50 % à 99 % en masse du fluxant, et au moins une coupe hydrocarbonée **CH** issue du raffinage du pétrole brut dont l'intervalle de distillation ID (en °C) est tel que 150 ≤ ID ≤ 450, en une fraction massique de 1 % à 50 % en masse du fluxant, en tant que fluxant pour une composition bitumineuse.

D'autres aspects et avantages de l'invention apparaîtront dans la description détaillée qui va suivre.

### DESCRIPTION DETAILLEE DE L'INVENTION

Dans une variante préférée de l'invention, on entend par ester ou amide d'acides gras les produits définis comme suit :
- Un ester d'acide gras est le produit de réaction entre au moins un acide gras et au moins un alcool, cet alcool pouvant être un mono-alcool linéaire ou ramifié comprenant de 1 à 5 atomes de carbones, ou un polyol comprenant de 2 à 5 groupements hydroxyles de préférence un glycol, et/ou deux glycérol. On peut ainsi obtenir des monoesters, des diesters et des triesters de polyols. Sont inclus dans cette définition, les huiles végétales elles-même et leurs produits de transestérification.
- Un amide d'acide gras est le produit de réaction entre au moins un acide gras et au moins une amine primaire, secondaire ou tertiaire ou des polyamines comprenant de 2 à 6 groupements amines. On ne sortirait pas du cadre de l'invention s'il s'agissait de carboxylates d'amines.

Ainsi, selon un mode préféré de réalisation de l'invention, le composé d'origine végétale ou animale **CVA** comprend au moins un ester d'acides gras obtenu avec au moins un mono-alcool ou au moins un polyol de 2 à 5 groupements hydroxyle.

Selon un autre mode préféré de l'invention, le composé d'origine végétale ou animale **CVA** comprend au moins un amide d'acides gras, obtenu avec au moins une amine et/ou au moins une polyamine.

Dans une variante préférée de l'invention, la coupe hydrocarbonée issue du raffinage du pétrole brut présente une teneur en composés aromatiques TCA (en % en poids) inférieure à 20%, de préférence inférieure à 10%. Plus préférentiellement, la coupe hydrocarbonée issue du raffinage du pétrole brut comprend plus de 50% en poids d'un mélange d'iso-paraffines et de paraffines naphténiques et moins de 5% de composés aromatiques.

Dans une autre variante préférée de l'invention, la coupe hydrocarbonée issue du raffinage du pétrole brut présente un intervalle de distillation ID (en °C) tel que 230≤ ID ≤ 350 et plus préférentiellement encore 250 ≤ ID ≤ 330. La coupe hydrocarbonée peut comprendre une ou plusieurs fractions d'intervalles de distillation compris dans celui de ladite coupe.

La combinaison de la coupe hydrocarbonée issue du raffinage du pétrole brut et du composé d'origine végétale ou animale dans le fluxant permet d'augmenter le point éclair du fluxant et de diminuer sa volatilité. Cette combinaison permet également d'optimiser au mieux le comportement à froid et à chaud, notamment au niveau de l'adhésivité du liant bitumineux, de réduire l'émission de fumées à l'application du liant et d'optimiser la consistance du liant à l'usage.

Selon une caractéristique remarquable de l'invention, le rapport massique **CH/CVA** est tel que : 50/50 ≤ **CH/CVA** ≤ 1/99, et mieux encore 20/80 ≤ **CH/CVA ≤** 10/90. Exprimé autrement, selon une caractéristique de l'invention, le fluxant comprend les fractions massiques suivantes de composé d'origine végétale ou animale **CVA** et de coupe hydrocarbonée **CH :**
- composé d'origine végétale ou animale **CVA :** de 50 % à 99 % en masse du fluxant, de préférence, de 80 % à 95 % en masse du fluxant,
- coupe hydrocarbonée **CH :** de 1 % à 50 % en masse du fluxant, de préférence de 5 % à 20 % en masse du fluxant.

Pour satisfaire aux normes de sécurité et pour permettre aux produits finis bitumineux de répondre également à ces normes, il est particulièrement avantageux que le fluxant selon l'invention ait un point éclair PC_{F} supérieur ou égal à 100°C, de préférence supérieur ou égal à 150°C et plus préférentiellement encore supérieur ou égal à 200°C.

De préférence, la coupe hydrocarbonée issue du raffinage du pétrole brut **CH** est une coupe de distillat moyen provenant directement ou indirectement de l'hydrocraquage de coupes de distillation sous vide, hydrotraitées ou non. Ces coupes de distillation sous vide peuvent être hydrotraitées, déazotées et /ou désulfurées avant ou après avoir été hydrocraquées et de même éventuellement distillées. Cette coupe hydrocarbonée issue du raffinage du pétrole brut est donc assimilable à un solvant hydrocraqué et/ou hydrotraité selon des procédures conventionnelles pour l'homme de l'art du raffinage pétrolier.

Le terme « distillat moyen » fait référence aux techniques de distillation usuelles, dans lesquelles la gamme de température s'étend généralement entre 145°C et 550°C. Dans ce cas, une coupe de distillat moyen correspond aux produits obtenus par distillation, aux températures comprises le plus souvent entre 150 C et 450°C.

Avantageusement, cette coupe hydrocarbonée issue du raffinage du pétrole brut comprend de 40 à 70 % en poids d'iso-paraffines, de préférence de 50 à 60 % en poids d'iso-paraffines ainsi que de 30 à 60 % en poids de naphtènes, de préférence de 40 à 60 %.

La coupe hydrocarbonée du fluxant selon l'invention a par ailleurs l'avantage d'être facilement accessible, d'être relativement économiques au sein de la chaîne des produits de la distillation pétrolière, et de permettre des abaissements de viscosité du bitume tout à fait significatifs.

Dans une variante de l'invention, la coupe hydrocarbonée mise en oeuvre est une coupe hydrogénée, c'est-à-dire dont plus de 90 % des composants sont saturés, voire mieux encore, plus de 95 % des composants sont saturés.

Selon une variante de l'invention, le composé d'origine animale ou végétale CVA présente une perte de masse PM₂₀₀ (en % en poids à 200°C) lors d'une analyse thermogravimétrique sous air telle que PM₂₀₀ ≤ 25 %, de préférence PM₂₀₀ ≤ 10 % et plus préférentiellement PM₂₀₀ ≤ 3 %.

On préfère la mise en oeuvre d'un composé d'origine végétale ou animale dont l'indice d'iode est suffisamment élevé pour assurer une bonne montée en consistance du bitume fluxé. De la sorte, contrairement aux fluxants utilisés précédemment, la coupe d'origine végétale ou animale selon l'invention s'évapore peu lors de la mise en oeuvre.

Parmi les composés d'origine végétale, on choisira les acides, esters ou amides des huiles de pin (tall oil en anglais), de colza, de tournesol, de ricin, d'arachide, de lin, de coprah, d'olive, de palme, de coton, de mais, de suif, de saindoux, de palmiste, de soja, de courge, de pépin de raisin, d'argan, de jojoba, de sésame, de noix, de noisette, de bois de chine, de riz ainsi que les huiles de même type issues d'espèces hybrides ou génétiquement modifiées.

Parmi les composés d'origine animale, on peut citer les acides, esters et amides de graisses d'animaux marins, poissons ou mammifères marins et les graisses d'animaux terrestres telles que les graisses de cheval, de boeuf, de porc.

On préfère les acides gras d'huile de pin (ou tall oil fatty acids en anglais ou TOFA), contenant de 0,5 à 10 % d'acide résinique et ses dérivés ester à base de méthanol, d'éthanol, de glycol et de glycérol.

On préfère aussi les triglycérides et autres esters d'huile de soja et de colza, y compris de leurs hybrides ou espèces génétiquement modifiées.

En effet, en combinaison avec la coupe hydrocarbonée ces produits présentent une bonne synergie notamment en termes de volatilité et point éclair pour le fluxant ; d'adhésion aux granulats, de consistance à l'usage et d'émission de fumées à l'application pour le liant bitumineux.

L'invention concerne également l'utilisation du fluxant selon l'invention dans des compositions bitumineuses comprenant du bitume, additivé ou non de polymère, et obtenues ou non à l'aide d'une solution concentrée fluxant / polymère (solution-mère). Ces compositions bitumineuses présentent une très bonne adhésivité avec les granulats auxquels elles sont destinées à être mélangées pour les applications revêtements routiers.

Parmi les compositions bitumineuses, notamment les compositions anhydres ou sous forme d'émulsions, on peut citer notamment les compositions comprenant des bitumes purs, des bitumes fluidifiés, des bitumes fluxés et des bitumes oxydés ainsi que des mélanges de ces bitumes.

La préparation des compositions bitumineuses est réalisée selon des procédés et à l'aide de matériels connus de l'homme du métier. La principale différence réside dans le fait que l'on ajoute un fluxant particulier, le fluxant selon l'invention, aux composants habituels. Cela permet de conférer des caractéristiques, notamment mécaniques, particulières aux compositions ainsi préparées et aux matériaux que l'on peut obtenir à partir de ces compositions.

La composition bitumineuse selon l'invention comprend de 5 à 15% en masse de fluxant, de préférence de 7 à 10%.

Le bitume est un produit lourd pouvant être issu de différentes origines. Il peut notamment être issu de la fraction la plus visqueuse produite lors de la distillation directe de pétrole brut. Il peut également être obtenu en mélangeant différents effluents de raffinage comme les produits de desasphaltage, les résidus de viscoréduction, les produits de soufflage et/ou de l'asphalte naturel, en les associant éventuellement avec les résidus de distillation ci avant.

Il est en outre connu de modifier le bitume (ou le mélange de bitumes) en y mélangeant au moins un composé pouvant être de type (co)polymère, en vue d'améliorer certaines de ses performances mécaniques et thermiques.

Les bitumes purs et les bitumes polymères sont employés aussi bien dans le domaine des applications routières (par exemples, construction et entretien des chaussées) que dans le domaine des applications industrielles (par exemples, étanchéité de toitures et de digues, dalles de moquette).

A titre d'exemples de polymères pour bitume, on peut citer les élastomères tels que les copolymères SB, SBS, SIS, SBS*, SBR, EPDM, polychloroprène, polynorbornène et éventuellement les polyoléfines tels que les polyéthylènes PE, PEHD, le polypropylène PP, les plastomères tels que les EVA, EMA, les copolymères d'oléfines et d'esters carboxyliques insaturés EBA, les copolymères polyoléfines élastomères, les polyoléfines du type polybutène, les copolymères de l'éthylène et d'esters de l'acide acrylique, méthacrylique ou de l'anhydride maléique, les copolymères et terpolymères d'éthylène et de méthacrylate de glycidyle les copolymères éthylène-propylène, les caoutchoucs, les polyisobutylènes, les SEBS, les ABS.
- SB: copolymère à blocs du styrène et du butadiène
- SBS: copolymère à blocs styrène- butadiène-styrène
- SBS*: copolymère à blocs styrène- butadiène-styrène en étoile
- EVA: copolymère polyéthylène-acétate de vinyle
- EBA: copolymère polyéthylène-acrylate de butyle
- PE: polyéthylène
- EPDM: éthylène propylène diène modifié
- SIS: styrène-isoprène-styrène
- EMA: copolymère polyéthylène-acrylate de méthyle
- SEBS: copolymère du styrène, de l'éthylène, du butylène et du styrène
- ABS: acrylonitrile-butadiène-styrène
- PEHD: polyéthylène haute densité
- SBR: styrèné-b-butadiène-rubber

D'autres additifs peuvent être ajoutés afin de modifier les caractéristiques mécaniques d'un bitume. Il s'agit par exemple d'agents de vulcanisation et/ou d'agents de réticulation susceptibles de réagir avec un polymère, lorsqu'il s'agit d'un élastomère et/ou d'un plastomère, pouvant être fonctionnalisés et/ou pouvant comporter des sites réactifs.

Parmi les agents de vulcanisation, on peut citer ceux à base de souffre et ses dérivés, utilisés pour réticuler un élastomère à des teneur de 0,01% à 30% par rapport au poids d'élastomère.

Parmi les agents de réticulation, on peut citer les agents de réticulation cationiques tels que les mono ou poly acides, ou anhydride carboxyliques, les esters d'acides carboxyliques, les acides sulfoniques, sulfurique, phosphoriques, voire les chlorures d'acides, les phénols, à des teneurs de 0,01% à 30% par rapport au polymère. Ces agents sont susceptibles de régir avec l'élastomère et/ou le plastomère fonctionnalisé. Ils peuvent être utilisés en complément ou en remplacement des agents de vulcanisation.

Parmi les additifs susceptibles d'être utilisés, on citera les additifs d'adhésivité (ou dopes d'adhésivité) connus de l'homme du métier tels que des amines ou polyamines. On citera également les siccatifs susceptibles d'assurer la montée en cohésion dans le temps du liant fluxé.

Le fluxant selon l'invention donne accès à des solutions mères fluxant / polymère(s) pour bitumes stables, compatibles et permettant de disposer d'un concentré facile à stocker et à manipuler pour la préparation de compositions bitumineuses.

En outre, ces solutions concentrées en polymère peuvent éventuellement contenir un ou plusieurs additifs nécessaires à l'application visée par l'homme du métier.

Ainsi, l'invention concerne une solution-mère utile pour la préparation d'une composition bitumineuse, laquelle solution-mère comprend au moins un polymère et au moins un fluxant tel que défini ci-dessus. En particulier, la solution-mère est fortement concentrée en polymère.

Les proportions massiques (% en poids) fluxant/polymère dans la solution-mère sont les suivantes : de 10/90 à 90/10, de préférence de 20/80 à 80/20.

Par exemple, la composition bitumineuse sert de liant dans un matériau routier à base de bitume et de granulats routiers. De nombreux types de granulats sont envisageables. Ils sont préférentiellement sélectionnés parmi les granulats minéraux, par exemple les granulats routiers répondant aux normes pertinentes : NF EN 13043 "Granulats pour mélanges hydrocarbonés et pour enduits superficiels utilisés dans la construction des chaussées, aérodromes et autres zones de circulation" en Europe, ASTM C33 "Standard specification for concrete aggregates" aux Etats-Unis d'Amérique.

Ainsi, un aspect de l'invention concerne les différents bitumes routiers qui comportent une composition bitumineuse définie ci-dessus. Tout particulièrement, l'invention concerne des éléments constitué d'au moins un revêtement comprenant un fluxant ou une composition bitumineuse selon l'invention.

Ainsi, l'invention concerne par exemple les enduits superficiels, les enrobés à froid, les enrobés coulés à froid.

L'invention est illustrée par les exemples suivants donnés à titre non limitatif ne visant en aucun cas à limiter la portée de celle-ci.

### EXEMPLES

Les caractéristiques rhéologiques et mécaniques des bitumes ou des compositions bitume-polymère, bitume-fluxant, bitume-polymère-fluxant et fluxant-polymère auxquelles on fait référence dans ces exemples sont les suivantes :
- la teneur en composés aromatiques TCA est déterminée selon un test défini par la norme NF M 07024 ;
- l'intervalle de distillation ID exprimé en °C est défini selon la norme NF M 07002 ;
- le point éclair Cleaveland exprimé en °C est défini selon la norme EN ISO2592;
- le point de ramollissement T_{BA} exprimé en °C est défini selon la norme NF EN 1427 ;
- les températures basses et hautes selon le test Vialit à la plaque exprimées en °C sont définies selon la norme DIN V52022 ;
- stabilisation 48 heures à 80°C : il s'agit d'une méthode d'obtention d'une couche mince de liant, elle est réalisée suivant la norme DIN EN 52018.

Les compositions bitumineuses fluxées selon l'invention sont préparées en chauffant une base bitume dans un réacteur, sous agitation, entre 160 et 180°C. Le fluxant, mélange comprenant la coupe hydrocarbonée **CH** et le composé d'origine végétale ou animale **CVA** est introduit dans le réacteur et la composition bitume/fluxant est chauffée et agitée pendant 30 minutes. On ajoute également 0,3% en masse par rapport à la composition globale de dope.

La coupe hydrocarbonée est une coupe paraffinique contenant plus de 70% de paraffines non linéaires à teneur en aromatiques TCA inférieure à 5% en masse. La société TOTAL commercialise de telles coupes, par exemple sous la référence Hydroseal GH. Ces coupes sont des coupes hydrogénées dont les intervalles de distillation varient entre 248°C et 349°C. Une coupe hydrocarbonée préférée est l'Hydroseal G400H dont l'intervalle de distillation est entre 304°C et 349°C.

Le bitume utilisé est un bitume polymère SB (styrène-butadiène) réticulé. Il s'agit par exemple des bitumes Styrelf 65A ou Styrelf 13-60 de la société TOTAL.

Les coupes végétales sont le TOFA ou l'huile de soja. On peut se procurer le TOFA par exemple auprès des sociétés Forchem ou Arizona Chemicals. On peut se procurer l'huile de soja par exemple auprès de la société Cargill.

Le dope est du Polyram L200.

Les compositions témoins T₁, T₂ et T₃ sont préparées de la même façon que les compositions bitumineuses fluxées selon l'invention et sont telles que (en % poids) :
- Composition T₁ : bitume/TOFA/dope 92,7/7/0,3
- Composition T₂ : bitume/huile de soja/dope 90,7/9/0,3
- Composition T₃: bitume/coupe hydrocarbonée/dope 90,7/9/0,3

Les compositions selon l'invention sont telles que (en % poids) :
- Composition C₁ : bitume/TOFA/coupe hydrocarbonée/dope 92,7/6/1/0,3
- Composition C₂ : bitume/huile de soja/coupe hydrocarbonée/dope 90,7/8/1/0,3

| | T₁ | C₁ | T₂ | C₂ | T₃ |
|---|---|---|---|---|---|
| Bitume (% masse) | 92,7 | 92,7 | 90,7 | 90,7 | 90,7 |
| CVA (nature) | TOFA | TOFA | Huile soja | Huile soja | - |
| CVA (% masse) | 7 | 6 | 9 | 8 | - |
| CH (% masse) | - | 1 | - | 1 | 9 |
| Dope (% masse) | 0,3 | 0,3 | 0,3 | 0,3 | 0,3 |
| | T₁ | C₁ | T₂ | C₂ | T₃ |

| Avant stabilisation | | | | | |
|---|---|---|---|---|---|
| Température à froid selon le test Vialit (°C) | 1 | -4 | -1 | -6 | -14 |
| Température à chaud selon le test Vialit (°C) | 65 | 76 | 63 | 78 | 71 |

| Après stabilisation | | | | | |
|---|---|---|---|---|---|
| Point de ramollissement T_{BA} (°C) | 38 | 44 | 39 | 44 | 52 |
| Température à froid selon le test Vialit (°C) | 4 | -4 | 1 | -6 | -2 |
| Température à chaud selon le test Vialit (°C) | 65 | 73 | 63 | 73 | 85 |

D'après les résultats du test Vialit, la température à froid à laquelle 90% des granulats restent sur la plaque, est plus basse lorsqu'on utilise un bitume fluxé selon l'invention c'est-à-dire fluxé à l'aide d'un mélange d'une coupe hydrocarbonée et d'une coupe d'origine végétale.

Pour analyser ce tableau, il convient de comparer le résultat théorique que l'on obtiendrait en combinant les différents témoins entre eux (colonnes T1, T2, T3), avec les résultats effectivement obtenus (colonnes C1, C2). S'il n'existe pas de synergie entre les effets de différents composants du fluxant mis en oeuvre, alors le résultat effectif doit correspondre à une simple combinaison linéaire des résultats des différents témoins. Par exemple, si l'on considère la composition bitumineuse C1, les proportions massiques de ses composants correspondent à 0,89 x T1 + 0,11 x T3. Pour calculer les résultats théoriques de C1, on applique la même relation linéaire aux résultats obtenus pour T1 et T3. On constate que les résultats obtenus pour C1 s'écartent de la valeur théorique calculée. Il existe donc un effet non linéaire, ce qui démontre l'existence d'une synergie entre les effets de différents composants du fluxant mis en oeuvre.

Ainsi la combinaison d'une coupe hydrocarbonée et du TOFA (C₁) entraîne une amélioration du comportement à froid en diminuant de 5°C la température mesurée par l'essai Vialit (la température du témoin T₁ est de 1°C à comparer avec la température de la composition C₁ de - 4°C).

De même à chaud, la combinaison de la coupe hydrocarbonée et de l'huile de soja, entraîne une augmentation de la température à chaud de 15°C.

Ces diminutions de la température à froid et augmentations de la température à chaud permettent une bonne adhésivité sur un plus large intervalle de température du liant bitumineux fluxé à l'aide du fluxant selon l'invention par rapport à des liants fluxés uniquement à l'aide d'huiles végétales.

En outre, on remarque que la consistance du bitume est améliorée. Le point de ramollissement bille et anneau T_{BA} augmente lorsque l'on utilise le fluxant selon l'invention. Par exemple, la T_{BA} vaut 44°C dans la composition C₁ alors qu'elle ne vaut que 38°C dans le témoin T₁.

Enfin ces effets sont nettement supérieurs à la somme arithmétique des effets obtenus avec chacun des constituants du fluxant pris séparément, traduisant une synergie entre les deux composants du fluxant, c'est-à-dire entre la coupe hydrocarbonée CH et le composé d'origine végétale ou animale CVA.

## Revendications

1. Fluxant pour composition bitumineuse comprenant :
- au moins un composé d'origine végétale ou animale **CVA** choisi parmi les acides gras en C₆ à C₂₄ sous forme acide, ester ou amide, en une fraction massique de 50 % à 99 % en masse du fluxant,
- au moins une coupe hydrocarbonée issue du raffinage du pétrole brut **CH** dont l'intervalle de distillation ID (en °C défini selon la norme NF M 07002) est tel que 150 ≤ ID ≤ 450, en une fraction massique de 1 % à 50 % en masse du fluxant.

2. Fluxant selon la revendication 1, dans lequel la coupe hydrocarbonée issue du raffinage du pétrole brut **CH** comprend moins de 20% en poids de composés aromatiques.

3. Fluxant selon l'une quelconque des revendications précédentes, dans lequel la coupe hydrocarbonée issue du raffinage du pétrole brut **CH** comprend plus de 50% en poids d'iso-paraffines et de paraffines naphténiques et moins de 5% en poids de composés aromatiques.

4. Fluxant selon l'une quelconque des revendications précédentes, dans lequel la coupe hydrocarbonée issue du raffinage du pétrole brut **CH** comprend de 40 à 70% en poids d'iso-paraffines, ainsi que de 30 à 60% en poids de naphtènes.

5. Fluxant selon l'une quelconque des revendications précédentes, dans lequel le composé d'origine végétale ou animale **CVA** comprend au moins un acide gras d'huile de pin.

6. Fluxant selon la revendication 5, dans lequel l'acide gras d'huile de pin est un acide gras de tall oil.

7. Fluxant selon l'une quelconque des revendications précédentes, dans lequel le composé d'origine végétale ou animale **CVA** comprend au moins une huile de soja et/ou une huile de colza.

8. Composition bitumineuse comprenant au moins un bitume et au moins un fluxant comprenant :
- au moins un composé d'origine végétale ou animale **CVA** choisi parmi les acides gras en C₆ à C₂₄ sous forme acide, ester ou amide, en une fraction massique de 50 % à 99 % en masse du fluxant,
- au moins une coupe hydrocarbonée issue du raffinage du pétrole brut **CH** dont l'intervalle de distillation ID (en °C défini selon la norme NF M 07002) est tel que 150 ≤ ID ≤ 450, en une fraction massique de 1 % à 50 % en masse du fluxant.

9. Composition bitumineuse selon la revendication 8 comprenant de 5 à 15% en masse de fluxant.

10. Composition bitumineuse selon l'une quelconque des revendications 8 ou 9, comprenant en outre au moins un polymère.

11. Composition bitumineuse selon les revendications 8 à 10, sous la forme d'une émulsion.

12. Solution-mère pour la préparation d'une composition bitumineuse, ladite solution-mère comprenant au moins un polymère et au moins un fluxant, ledit fluxant comprenant :
- au moins un composé d'origine végétale ou animale **CVA** choisi parmi les acides gras en C₆ à C₂₄ sous forme acide, ester ou amide, en une fraction massique de 50 % à 99 % en masse du fluxant,
- au moins une coupe hydrocarbonée issue du raffinage du pétrole brut **CH** dont l'intervalle de distillation ID (en °C défini selon la norme NF M 07002) est tel que 150 ≤ ID ≤ 450, en une fraction massique de 1 % à 50 % en masse du fluxant.

13. Association bitume-granulats comprenant des granulats et un liant bitumineux obtenu à partir d'une composition bitumineuse selon l'une quelconque des revendications 8 ou 9.

14. Utilisation d'une composition comprenant :
- au moins un composé d'origine végétale ou animale **CVA** choisi parmi les acides gras en C₆ à C₂₄ sous forme acide, ester ou amide, en une fraction massique de 50 % à 99 % en masse du fluxant,
- au moins une coupe hydrocarbonée issue du raffinage du pétrole brut **CH** dont l'intervalle de distillation ID (en °C défini selon la norme NF M 07002) est tel que 150 ≤ ID ≤ 450, en une fraction massique de 1 % à 50 % en masse du fluxant,
en tant que fluxant pour une composition bitumineuse.

## Claims

1. Flux for a bituminous composition comprising:
- at least one compound of plant or animal origin **CVA** selected from C₆ to C₂₄ fatty acids in acid, ester or amide form, in a mass fraction of from 50% to 99% by mass of the flux,
- at least one hydrocarbon fraction resulting from crude oil refining **HC,** the distillation range DR of which (in °C, defined in accordance with the standard NF M 07002) is such that 150 ≤ DR ≤ 450, in a mass fraction of from 1% to 50% by mass of the flux.

2. Flux according to claim 1, wherein the hydrocarbon fraction resulting from crude oil refining **HC** comprises less than 20% by weight of aromatic compounds.

3. Flux according to either of the preceding claims, wherein the hydrocarbon fraction resulting from crude oil refining **HC** comprises more than 50% by weight of isoparaffins and naphthenic paraffins and less than 5% by weight of aromatic compounds.

4. Flux according to any one of the preceding claims, wherein the hydrocarbon fraction resulting from crude oil refining **HC** comprises from 40 to 70% by weight of isoparaffins and also from 30 to 60% by weight of naphthenes.

5. Flux according to any one of the preceding claims, wherein the compound of plant or animal origin **CVA** comprises at least one pine oil fatty acid.

6. Flux according to claim 5, wherein the pine oil fatty acid is a tall oil fatty acid.

7. Flux according to any one of the preceding claims, wherein the compound of plant or animal origin **CVA** comprises at least one soya oil and/or one colza oil.

8. Bituminous composition comprising at least one bitumen and at least one flux comprising:
- at least one compound of plant or animal origin **CVA** selected from C₆ to C₂₄ fatty acids in acid, ester or amide form, in a mass fraction of from 50% to 99% by mass of the flux,
- at least one hydrocarbon fraction resulting from crude oil refining **HC,** the distillation range DR of which (in °C, defined in accordance with the standard NF M 07002) is such that 150 ≤ DR ≤ 450, in a mass fraction of from 1% to 50% by mass of the flux.

9. Bituminous composition according to claim 8 comprising from 5 to 15% by mass of flux.

10. Bituminous composition according to either claim 8 or claim 9, also comprising at least one polymer.

11. Bituminous composition according to claims 8 to 10, in the form of an emulsion.

12. Stock solution for the preparation of a bituminous composition, the stock solution comprising at least one polymer and at least one flux, the flux comprising:
- at least one compound of plant or animal origin **CVA** selected from C₆ to C₂₄ fatty acids in acid, ester or amide form, in a mass fraction of from 50% to 99% by mass of the flux,
- at least one hydrocarbon fraction resulting from crude oil refining **HC,** the distillation range DR of which (in °C, defined in accordance with the standard NF M 07002) is such that 150 ≤ DR ≤ 450, in a mass fraction of from 1% to 50% by mass of the flux.

13. Bitumen-aggregate combination comprising aggregates and a bituminous binder which is obtained from a bituminous composition according to either claim 8 or claim 9.

14. Use of a composition comprising:
- at least one compound of plant or animal origin **CVA** selected from C₆ to C₂₄ fatty acids in acid, ester or amide form, in a mass fraction of from 50% to 99% by mass of the flux,
- at least one hydrocarbon fraction resulting from crude oil refining **HC,** the distillation range DR of which (in °C, defined in accordance with the standard NF M 07002) is such that 150 ≤ DR ≤ 450, in a mass fraction of from 1% to 50% by mass of the flux,
as a flux for a bituminous composition.

## Patentansprüche

1. Flussmittel für eine bituminöse Zusammensetzung, umfassend:
- wenigstens eine Verbindung pflanzlichen oder tierischen Ursprungs CVA, ausgewählt aus C₆- bis C₂₄-Fettsäuren in Säure-, Ester- oder Amidform, in einer Massenfraktion von 50 % bis 99 % der Masse des Flussmittels,
- wenigstens einen Kohlenwasserstoffschnitt der Rohölraffination CH, mit einem Siedeverlauf ID (in °C, definiert nach der Norm NF M 07002) von 150 ≤ ID ≤ 450, dessen Massenfraktion von 1 % bis 50 % der Masse des Flussmittels ist.

2. Flussmittel nach Anspruch 1, worin der Kohlenwasserstoffschnitt der Rohölraffination CH weniger als 20 Gew.-% an aromatischen Verbindungen umfasst.

3. Flussmittel nach einem der vorhergehenden Ansprüche, worin der Kohlenwasserstoffschnitt der Rohölraffination CH mehr als 50 Gew.-% Isoparaffine und naphthenische Paraffine und weniger als 5 Gew.-% aromatische Verbindungen umfasst.

4. Flussmittel nach einem der vorhergehenden Ansprüche, worin der Kohlenwasserstoffschnitt der Rohölraffination CH 40 bis 70 Gew.-% Isoparaffine, sowie auch 30 bis 60 Gew.-% Naphthene umfasst.

5. Flussmittel nach einem der vorhergehenden Ansprüche, worin die Verbindung pflanzlichen oder tierischen Ursprungs CVA wenigstens eine Pinienöl-Fettsäure umfasst.

6. Flussmittel nach Anspruch 5, worin die Pinienöl-Fettsäure eine Tallöl-Fettsäure ist.

7. Flussmittel nach einem der vorhergehenden Ansprüche, worin die Verbindung pflanzlichen oder tierischen Ursprungs CVA wenigstens ein Sojaöl und/oder ein Rapsöl umfasst.

8. Bituminöse Zusammensetzung, umfassend wenigstens ein Bitumen und wenigstens ein Flussmittel, umfassend:
- wenigstens eine Verbindung pflanzlichen oder tierischen Ursprungs CVA, ausgewählt aus C₆- bis C₂₄-Fettsäuren in Säure-, Ester- oder Amidform, in einer Massenfraktion von 50 % bis 99 % der Masse des Flussmittels,
- wenigstens einen Kohlenwasserstoffschnitt der Rohölraffination CH, mit einem Siedeverlauf ID (in °C, definiert nach der Norm NF M 07002) von 150 ≤ ID ≤ 450, dessen Massenfraktion von 1 % bis 50 % der Masse des Flussmittels ist.

9. Bituminöse Zusammensetzung nach Anspruch 8, umfassend 5 bis 15 Massenprozent Flussmittel.

10. Bituminöse Zusammensetzung nach einem der Ansprüche 8 oder 9, umfassend unter anderem wenigstens ein Polymer.

11. Bituminöse Zusammensetzung nach den Ansprüchen 8 bis 10 in Form einer Emulsion.

12. Mutterlösung zum Herstellen einer bituminösen Zusammensetzung, wobei die genannte Mutterlösung wenigstens ein Polymer und wenigstens ein Flussmittel umfasst, wobei das genannte Flussmittel umfasst:
- wenigstens eine Verbindung pflanzlichen oder tierischen Ursprungs CVA, ausgewählt aus C₆- bis C₂₄-Fettsäuren in Säure-, Ester- oder Amidform, in einer Massenfraktion von 50 % bis 99 % der Masse des Flussmittels,
- wenigstens einen Kohlenwasserstoffschnitt der Rohölraffination CH, mit einem Siedeverlauf ID (in °C, definiert nach der Norm NF M 07002) von 150 ≤ ID ≤ 450, dessen Massenfraktion von 1 % bis 50 % der Masse des Flussmittels ist.

13. Bitumen-Granulat-Verbund, umfassend Granulate und ein bituminöses Bindemittel, erhalten von einer bituminösen Zusammensetzung nach einem der Ansprüche 8 oder 9.

14. Verwendung einer Zusammensetzung, umfassend:
- wenigstens eine Verbindung pflanzlichen oder tierischen Ursprungs CVA, ausgewählt aus C₆- bis C₂₄-Fettsäuren in Säure-, Ester- oder Amidform, in einer Massenfraktion von 50 % bis 99 % der Masse des Flussmittels,
- wenigstens einen Kohlenwasserstoffschnitt der Rohölraffination CH, mit einem Siedeverlauf ID (in °C, definiert nach der Norm NF M 07002) von 150 ≤ ID ≤ 450, dessen Massenfraktion von 1 % bis 50 % der Masse des Flussmittels ist,
als Flussmittel für eine bituminöse Zusammensetzung.
